(19) Europäisches Patentamt
European Patent Office
Office européen des brevets

(11) **EP 2 700 986 A1**

(12) **EUROPEAN PATENT APPLICATION**

(43) Date of publication:
**26.02.2014 Bulletin 2014/09**

(51) Int Cl.:
**G02B 5/10** (2006.01)     **H05G 2/00** (2006.01)

(21) Application number: **12181814.0**

(22) Date of filing: **24.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Deutsches Elektronen-Synchrotron DESY**
  **22607 Hamburg (DE)**
• **Massachusetts Institute of Technology (MIT)**
  **Cambridge, MA 02139 (US)**

(72) Inventors:
• **Schimpf, Damian**
  **22605 Hamburg (DE)**
• **Putnam, William**
  **02139 Cambridge, MA (US)**
• **Kärtner, Franz**
  **22559 Hamburg (DE)**

(74) Representative: **UEXKÜLL & STOLBERG**
  **Patentanwälte**
  **Beselerstrasse 4**
  **22607 Hamburg (DE)**

(54) **Device and method for enhancing the intensity of a laser beam**

(57)     The invention relates to a device and a method for enhancing the intensity of a laser beam (29) having an intensity distribution which has an annular shape in the far field. The device comprises a resonator cavity (1, 49, 51, 57) that comprises at least four annularly closed reflective surfaces (3, 5, 7, 9, 53, 55). A first and a second reflective surface (3, 5) have a curvature defining a common focal point (21) and are arranged on opposite sides of a focal plane (23) that extends through the focal point (21). A third and a fourth reflective surface (7, 9) are ar-ranged on opposite sides of the focal plane (23). The resonator cavity (1, 49, 51, 57) and the reflective surfaces (3, 5, 7, 9, 53, 55) are arranged such that a laser beam (29) having an intensity distribution which has an annular shape in the far field can be introduced into the resonator cavity (1, 49, 51, 57) in such a manner, that it travels on a closed resonator path inside the resonator cavity (1, 49, 51, 57) and is reflected at least three times by the reflective surfaces (3, 5, 7, 9, 53, 55) between successive transitions of the focal point (21).

**Fig. 1**

**Description**

The invention relates to a device for enhancing the intensity of a laser beam having an intensity distribution which has an annular or annularly closed shape in the far field, the device comprising a resonator cavity, and to a method for enhancing the intensity of a laser beam having an intensity distribution which has an annular or annularly closed shape in the far field using a device according to the invention.

Optical resonator cavities or simply resonators or cavities enable coherent superposition of pulses circulating inside the resonator cavity. For resonator cavities with a high finesse, the intra-cavity power is enhanced by several orders of magnitude compared to the extra-cavity power. In other words, the intensity of laser beam is enhanced by several orders of magnitude inside the resonator cavity compared to outside the resonator cavity. This can be employed to initiate nonlinear processes that require high intensities, which conventionally can only be achieved with high-energy, and thus, low repetition-rate, ultrafast lasers. If the nonlinear process suffers a low single-pass conversion efficiency, such as high-harmonic generation (HHG), the cavity can reuse any non-converted light or fluence of the laser beam in the next roundtrip, and thus, high peak-powers at MHz repetition rates are possible. This enables nonlinear frequency conversion at high repetition rates to hard-accessible wavelengths in the extreme ultra violet (XUV) and infrared spectral range via HHG and difference frequency generation, respectively. The laser oscillator itself can be employed or an external cavity can be locked to a high-power, high-repetition rate ultrafast laser system. Such devices comprising a laser source and an external resonator cavity are usually significantly cheaper and more compact than laser sources with high peak intensities. Furthermore, they provide frequency-converted light at higher pulse repetition rates.

The construction of external resonator cavities is challenged by two major issues: in the focal point or focus or focal spot of the resonator cavity a laser beam intensity of more than $10^{13}$ W/cm$^2$ is required for HHG. These intensities can only be achieved using extremely stable resonator cavities comprising reflective surfaces having highly reflective coatings. These coatings, however, cannot withstand laser beam intensities exceeding $\sim 10^{11}$ W/cm$^2$. Hence, for a save continuous operation of the resonator cavity without damaging the coatings of the reflective surfaces the intensity of the laser beam has to be increased by a factor of more than $10^3$ (corresponding to 30 dB) between the reflective surfaces and the focal point. The factor by which the intensity of the laser beam can be increased between the reflective surfaces and the focal point will be referred to as the conversion factor.

An external resonator cavity for enhancing the intensity of a laser beam for HHG is, for example, known from a publication by S. Holzberger et al. titled "Sub-25 nm High-Harmonic Generation with a 78-MHz Repetition Rate Enhancement Cavity" published in the proceedings of the 2012 Quantum Electronics and Laser Science Conference on May 6, 2012. In the publication a resonator cavity, which is of the type of a bow-tie cavity configuration, comprising eight reflective surfaces is disclosed. Two of the eight reflective surfaces are spherically curved wherein the curvatures define a common focal point or focal spot of the resonator cavity. The remaining six reflective surfaces are all plane, i.e. the direction of a laser beam interacting with these reflective surfaces can be changed by them, but the focusing properties are not altered.

A laser beam having a Gaussian mode, i.e. a Gaussian intensity distribution, can be introduced into this prior art resonator cavity through one of the plane reflective surfaces in such a manner that on a full roundtrip through the resonator cavity the laser beam is reflected once by each of said reflective surfaces. The highest intensity of the laser beam can be observed in the focal point of the spherically curved reflective surfaces.

To generate XUV radiation using HHG with this prior art resonator cavity a gas jet is injected into the focal point. The generated XUV radiation or light X-rays are coupled out of the cavity through an opening in one of the curved reflective surfaces. An optimal out-coupling of the generated XUV radiation or light X-rays is achieved by locating the opening on the optical axis of the laser beam, i.e. in the centre of the beam spot of the laser beam on one of the curved reflective surface. A beam spot on a surface is defined as the area illuminated by a laser beam when it impinges on, is reflected by or traverses a surface. Obviously, locating the opening in the centre of the beam spot is disadvantageous as parts of the laser beam are also coupled out of the resonator cavity whereby the intensity of the laser beam is reduced. Moreover, the mode circulating inside the resonator is experiencing losses due to diffraction on the edges of the opening. Furthermore, cavities like the one known from the article by S. Holzberger *et al.* cannot exceed a conversion factor on the order of about $10^3$. Hence, the reflective surfaces will be damaged quickly if the peak intensities required for HHG are generated.

Another external resonator cavity is known from a publication by K.D. Moll et al. with the title "Output coupling methods for cavity-based high-harmonic generation" published in September 4, 2006 in Optics Express, Volume 14 No. 16. Moll et al. propose the use of a resonator cavity comprising eight reflective surfaces. Four of the reflective surfaces are arranged on either side of a central axis passing through a focal point of the cavity, thereby forming a first and a second part of the cavity. Each part of the cavity comprises two curved reflective surfaces for focusing the laser beam and two plane or planar reflective surfaces for steering the laser beam. In operation, a laser beam having a Gaussian mode in the resonator cavity is focused by a first spherically curved reflective surface of the first part of the cavity into a focal point, travels through the second part of the cavity and is once again focused into the same focal point by the first reflective surface of the second part of the cavity. If the length of the cavity is adjusted correctly, i.e. such that the time a pulse of the laser beam requires to travel through the full resonator cavity, equals double the inverse repetition rate of the laser beam pulses, two consecutive laser pulses overlap at the focal point. Thereby, the intensity of the laser beam available in the focal point and, likewise, the conversion factor is theoretically doubled compared to a conventional bow-tie cavity as the one known from S. Holzberger et al. Furthermore, the radiation generated by HHG can be coupled out of the cavity through a gap between the two parts of the cavity without the need of a hole or opening in any of the reflective surfaces. Hence, no beam intensity is lost in the out-coupling of the radiation, which is generated by a nonlinear frequency conversion process, such as HHG.

However, the resonator cavity has double the length of a conventional bow-tie cavity and is difficult to calibrate and to stabilize as the timing jitter and de-phasing between the few-cycle pulses affect the interference, and thus this diminishes the available peak-power. The cavity requires very advanced diagnostic tools adding a high degree of complexity to the already complex task of cavity enhancement and basically renders the approach impractical. Furthermore, alignment is a critical issue since spatial and temporal overlap must be ensured while preventing timing jitter and dephasing. The latter is an inherent problem in setups that comprise several optical elements, i.e. reflective surfaces or mirrors in the present case. Moreover, as the resonator cavity is based on a Gaussian beam, the concept also suffers from a small conversion factor between the reflective surfaces and the focal point. Hence, the resonator has to be operated at power values in which damage of the reflective surfaces is an issue.

Putnam et al. have disclosed an alternative resonator cavity design in a publication titled "High-Intensity Bessel-Gauss Beam Enhancement Cavities" published in the proceedings of the 2010 Conference on Lasers and Electro-Optics on May 16, 2010. Instead of using a conventional laser beam that has a Gauss mode in the resonator cavity, Putnam et al. employ a laser beam having an intensity distribution with a central peak in a focal plane and an annular or ring-like shape outside the focal plane i.e. in the far field. The resonator is designed such that its fundamental mode solution is a laser beam similar to an ordinary Bessel-Gauss beam, or simply, a Bessel-Gauss beam.

Such a laser beam can be generated from a laser beam having a Gauss mode by refractive aspheric optical elements like an axicon, i.e. a lens that has a conical surface. Alternatively, diffractive optical elements can be used. Or, a mode-converter in form of a special optical fiber can be employed. Alternatively, one can start with a laser source that directly outputs a laser beam exhibiting a Bessel-Gauss beam or a ring-like shape.

The resonator cavity disclosed by Putnam et al. comprises a first and a second annularly closed reflective surface with a circular circumference. The reflective surfaces have a spherical curvature. The first reflective surface focuses the Bessel-Gauss beam into a focal point, and the second reflective surface reflects the laser beam coming out of the focal point back to the first reflective surface without intersecting the focal point a second time. Such a cavity is advantageous as it is based on a Bessel-Gauss beam. These beam types offer an increase of the conversion factor simply due to the properties of the Bessel-Gauss beam. The beam spot on the reflective surfaces has a ring-like or annular distribution that distributes the intensity across a relatively wide area. Thus, the beam can avoid holes in the mirror centre without experiencing fluence losses. Bessel-Gauss beams have the additional benefit that in the focal point of the resonator cavity the full intensity is available in a single, point-like spot. The conversion factor easily exceeds $10^3$ such that a continuous operation of the resonator cavity with beam intensities at the focal point exceeding those required for HHG is possible.

However, such a resonator cavity is limited in its degree of design freedom. For stable operation the radius of curvature of the reflective surfaces is directly related to the distance between the reflective surfaces and, therefore, the optical length of a roundtrip of a laser beam in the resonator cavity. In turn, this determines the inherent repetition rate of the resonator cavity i.e. the repetition rate at which two consecutive pulses of the laser beam interfere constructively at the focal point of the resonator cavity. Thus, the curvature and to be more specific the radius of the curvature and pulse repetition rate are directly related. Additionally, the curvature also impacts the waist of the laser beam in the focal point. This is because of the confocal configuration of the resonator.

Furthermore, as the resonator cavity is confocal it shows mode degeneracy. Only the least divergent beam should be selected for preferential fundamental mode operation. The radii of curvature of the mirrors determine the waist of the least divergent beam. However, a small waist is needed in order to reach the intensities needed for nonlinear frequency conversion, e.g. HHG. The cavity of Putnam et al. does not allow for this flexibility. Thus, good focussing is an inherent problem. Another, severe drawback is the mode degeneracy. Single transverse mode propagation is desired in order to avoid mode-competition and mode coupling when interacting with a nonlinear medium, e.g. gas jet in HHG. In addition, the confocal cavity of Putnam et al. is not very compact as the distance between the reflective surfaces has to be, for example, 1.5 m for a repetition rate of 100 MHz.

In view of the foregoing discussion it is therefore an object of the present invention to provide a device and a method for enhancing the intensity of a laser beam having an intensity distribution which has an annular or annularly closed shape in the far field that further increases the intensity of the laser beam in the focal point while reducing the intensity of the laser beam in the beam spot on the reflective surfaces and allowing the resonator cavity to be operated with pulsed laser beams having different repetition rates.

According to a first aspect of the invention a device for enhancing the intensity of a laser beam is provided having an intensity distribution that is annular, i.e. has an annular or annularly closed shape in the far field. The device comprises a resonator cavity, and the resonator cavity comprises at least four annularly closed reflective surfaces. A first reflective surface and a second reflective surface of the at least four reflective surfaces have a curvature defining a common focal point and are arranged on opposite sides of a focal plane that extends through the focal point. A third reflective surface and a fourth reflective surface of the at least four reflective surfaces are arranged on opposite sides of the focal plane. The resonator cavity and the reflective surfaces are arranged such that a laser beam having an intensity distribution with an annular or annularly closed shape in the far field can be introduced into the resonator cavity in such a manner, that it travels on a closed resonator path inside the cavity and is reflected at least three times by the reflective surfaces between successive transitions of the focal point.

Preferably, the device enhances the intensity of a laser beam further having an intensity distribution having a central peak or an annular or annularly closed shape in a focal point, or, more preferred, a shape of a Bessel-Gauss beam in a focal point.

Thus, in other words, the present invention provides a solution for the above problem by providing a resonator cavity comprising at least four reflective surfaces and preferably exactly four reflective surfaces. Having exactly four reflective surfaces is preferred as this yields the highest conversion factor. Each of these reflective surfaces is an annularly closed surface. In other words, each reflective surface is delimited by exactly two continuous edges, each formed by a closed line. The term annular surface refers to any surface with two continuous edges and is not limited to surfaces having a circular circumference, edge or cross-section. Annular surfaces do not necessarily have any kind of rotational symmetry. A reflective surface may be any kind of surface, e.g. a mirror, as long it is highly reflective for the laser beam whose intensity shall be enhanced using the device.

Depending on the application of the resonator cavity the finesse (or intensity enhancements) of the cavity must be chosen. The intensity enhancement is a function of the reflectances of the reflective surfaces. Assuming no diffraction losses, the intensity enhancement at resonance of the resonator cavity (i.e. the point of operation) is given by

$$(1-R_i) / (1 - (R_1 \cdot \ldots \cdot R_n)^{1/2})^2 \qquad\qquad (1)$$

where $R_i$ is the reflectance of the in-coupling surface, and $R_1, \ldots R_n$ are the reflectances or reflectivities of the n reflective surfaces comprised in the resonator cavity. Intensity enhancements higher than 100 are typically required for HHG. However, intensity enhancements exceeding 1000 may be disadvantageous as there is a tradeoff between achievable intensity enhancement and dispersion and phase-aberrations. Therefore, enhancement cavities must typically have reflectances higher than 0.99 for all reflective surfaces but not too high in order to prevent disadvantageous effects of dispersion and phase-aberrations.

The first and the second reflective surface have a curvature defining a common focal point. In other words, a suitable laser beam having an intensity distribution with an annular or annularly closed shape in the far field or, in other words, outside the focal plane can be focused by either of the first and the second reflective surface into the focal point. The first and the second reflective surface are arranged on either side of a focal plane extending through the focal point.

Furthermore, the third and the fourth reflective surface are comprised by the resonator cavity on either side of the focal plane. The third and fourth reflective surfaces are preferably conically shaped and used as simple steering reflective surfaces or steering mirrors. In another preferred embodiment the reflective surfaces have an aspheric curvature.

The resonator cavity and the reflective surfaces are arranged such that a laser beam having an intensity distribution with an annular or annularly closed shape in the far field can be introduced into the resonator cavity in such a manner, that it travels on a closed resonator path inside the cavity and is reflected at least three times by the reflective surfaces between successive transition of the focal point. The laser beam is not necessarily reflected by at least three different reflective surfaces, it may also be reflected multiple times by the same reflective surface.

This preferred embodiment of the device according to the invention does not put any constraints on the relative distance of the reflective surfaces to the focal point. In other words, either the first or the second reflective surface, or both, can be arranged closer or further away from the focal point than the third or fourth reflective surface. Also, the distances of the first and second reflective surface to the focal point can be but do not have to be the same.

The present invention provides a way of increasing the intensity of the laser beam in the focal point while at the same time ensuring a significantly reduced intensity of the laser beam on the reflective surfaces. While this could also be realized by a resonator cavity consisting of a pair of toroidal reflective surfaces, such a resonator cavity is very unstable.

The third and fourth reflective surfaces which could also be referred to as the steering surfaces in a resonator cavity according to the invention increase the stability of the cavity. Furthermore, the steering of the beam by the steering surfaces increases the imaging distance relative to the distance between the focus and the reflective surface, the latter distance is also know as object distance. This results in a magnification of the Gaussian waist parameter of the laser beam outside the focal point. Furthermore, the addition of a third and a fourth reflective surface allows for a more compact design of the resonator cavity as the distance between the first and the second reflective surface can be reduced.

In a preferred embodiment at least two of the reflective surfaces are arranged on a common substrate. It is, for example, conceivable that the first and the third reflective surface are arranged on the same substrate. Likewise, the second and the fourth reflective surface are, preferably, also arranged on a common substrate.

Furthermore, it is preferred if at least two reflective surfaces are linked together i.e. by adjusting the position of one of the reflective surfaces the position of the linked reflective surface is also adjusted. The reflective surfaces may, for example, be linked by arranging them on a common substrate.

It is preferred to arrange the reflective surfaces such that the laser beam is reflected once by each of the reflective surfaces between successive transitions of the focal point. Assuming that the laser beam has been focused into the focal point by the first reflective surface, the laser beam is then reflected by the second reflective surface onto the third reflective surface. The third reflective surface reflects the laser beam onto the fourth reflective surface from where it is reflected once again to the first reflective surface. The first reflective surface then focuses the laser beam back into the focal point. Reflecting the laser beam once by each of the reflective surfaces between successive transitions of the focal point is advantageous as the beam spots on the reflective surfaces cover a wide area allowing for a high conversion factor. Hence, high laser beam intensities in the focal point can be achieved without damaging the coating forming the reflective surfaces. Moreover, in the described beam path the focus is only transitioned in one direction. This implies, that frequency converted light is only generated in one direction.

Alternatively, it is preferred to arrange the reflective surfaces such that the laser beam is reflected twice by the first or the second reflective surface and once by the third or the fourth reflective surface between successive transitions of the focal point. A laser beam having an intensity distribution which has a Gaussian shape in a focal plane and an annular or annularly closed shape outside the focal plane can be, for example, coupled into the resonator cavity through the third reflective surface onto the second reflective surface. The second reflective surface can focus the laser beam into the focal point. Next, the laser beam can be reflected by the first reflective surface onto the fourth reflective surface. The fourth reflective surface can reflect the laser beam back onto the first reflective surface that can focus the laser beam into the focal point. Provided that a laser beam with a pulse repetition rate matching the resonator cavity's inherent pulse rate is introduced into the resonator cavity, consecutive pulses can be overlapped in the focal point of the resonator cavity from different directions. Thereby, the intensity of the laser beam in the focal point can be increased without exceeding the damage threshold of the reflective surfaces.

In a preferred embodiment at least one and preferably all of the reflective surfaces are rotationally symmetric about a common central axis that intersects the focal point and extends perpendicular to the focal plane. The reflective surfaces may have a circular cross section, i.e. the inner and the outer edge of each reflective surface may be formed by a circle. Such a design is advantageous as a laser beam having an intensity distribution with an annular or annularly closed shape in the far field is comparatively easy to generate from a regular laser beam having a Gauss mode. Moreover, rotationally symmetric shapes are easier to fabricate.

It is further preferred that the curvature of the first reflective surface and the second reflective surface is aspheric. Here, the term curvature refers solely to the shape of the reflective surfaces in planes that are perpendicular to the focal plane and intersect the focal point. An aspheric curvature further considerably increases the flexibility of the design of the resonator cavity as the focussing of the ring-beam is not determined by the length of the cavity. So the effective waist of the beam in the focus can be adapted for various different pulse repetition rates of a pulsed laser beam introduced into the resonator cavity.

In another preferred embodiment the reflective surfaces are arranged symmetrically about the focal plane. In other words, the first and the second reflective surface and the third and the fourth reflective surface are preferably of identical shape and arranged such that the first reflective surface represent the mirror image of the second reflective surface, wherein the focal plane is the mirror plane. Likewise, the third reflective surface represents the mirror image of the fourth reflective surface. This embodiment is especially advantageous as the reflective surfaces can be most easily aligned with respect to one another and only two kinds of reflective surfaces must be manufactured. This also ensures maximum separation of all surfaces with respect to the high intensity focus. The further away from this point the lower the intensity on the coating and thus, the chance of damage is decreased. In this way, the damage of all reflective surfaces is approximately the same.

The reflective surfaces of a further preferred embodiment are arranged such that the conjugate focal plane of the first and second reflective surface is identical to the focal plane. The conjugate focal plane is the plane in which the image of an object located in the focal point is projected. Vice versa, an image located in the conjugate focal plane is focused by a focusing reflective surface into the focal point. Hence, if the first and the second reflective surfaces' conjugate focal planes are identical with the focal plane, the arrangement of the reflective surfaces in the resonator cavity is highly symmetric and therefore easy to adjust. Furthermore, this condition ensures that the distance form the focus to the reflective surfaces is maximised. This allows for the best conversion factor.

In a preferred embodiment half an optical length of a roundtrip of a laser beam in the resonator cavity is equal to the sum of the object distance and image distance of the first and/or the second reflective surface. The term object distance refers to the propagation distance of the laser beam on axis (i.e. the central symmetry axis of the arrangement) between a focal point of a reflective surface and the reflective surface and the term image distance refers to the propagation distance of the laser beam between the reflective surface and a conjugate focal plane of the reflective surface. It is further preferred if the above criterion is met by both the first and the second reflective surface. A length of the resonator path is defined as the distance travelled by a laser beam in the resonator cavity between successive transitions of the focal point, i.e. the length corresponding to one roundtrip.

It is further preferred that half a length of the resonator path between successive transitions of the focal point by the laser beam is equal to the sum of the object distance and image distance of the first and the second reflective surface. Thereby, a resonator cavity is provided that can be operated in a stable and efficient enhancement mode.

It is further preferred that the laser beam, which is introduced into the resonator cavity, can be pulsed with a repetition rate which corresponds to the resonator cavity's inherent repetition rate multiplied or divided by an integer. It is most preferred if the integer is one, but operation is not limited to this value. Hence, the laser beam travels the full resonator distance in integer multiples or integer fractions of the separation time of consecutive pulses of the driving laser, i.e. consecutive pulses of the pulsed laser beam interfere at the focal point and a stable resonating condition can be achieved.

In another preferred embodiment the inverse of an effective focal length $f$ of the first reflective surface is equal to the sum of the inverse of the image distance $s''$ of the first reflective surface and the inverse of a second term, wherein the second term is the sum of the object distance s of the first reflective surface and the squared Rayleigh-length $Z_R$ of a Gaussian component of the laser beam divided by the difference between the object distance s and the effective focal length f of the first reflective surface i.e.

$$1/f = 1/s'' + 1/(s + z_R^2/(s - f)) \tag{2}$$

The Rayleigh-length $Z_R$ is equal to $\pi$ times the square of the waist parameter of the Gaussian beam parameter $w_0$ divided by the wavelength of the laser beam or, expressed as an equation,

$$z_R = \pi \cdot w_0^2/\lambda. \tag{3}$$

Equation (2) is the so-called imaging condition for a Gaussian component of the beam. For stable operation of the cavity, the laser beam must be re-imaged from one roundtrip to the other. This is described by

$$s + s'' = r \tag{4}$$

wherein r is half of the roundtrip length of the resonator.

It is further preferred that the object distance s of the first reflective surface is that object distance s satisfying the equation

$$0 = -s^3 + (r+f) \cdot s^2 + (-2 \cdot r \cdot f - z_R^2) \cdot s + (r \cdot z_R^2 - f \cdot z_R^2 + r \cdot f^2) \tag{5}$$

that yields the largest width of the laser beam having an intensity distribution with an annular or annularly closed shape in the far field on the first reflective surface, where f is the effective focal length of the first reflective surface and $Z_R$ is the Rayleigh-length of a Gaussian component of the laser beam. Equation (5) is a combination of equations (2) and (4). Hence, such a device combines the advantages of those devices fulfilling equations (2) and (4) and is further advantageous as it provides stable operation and the widest possible beam spot and therefore the lowest laser beam intensity on the reflective surfaces for a given width of the focal point. Hence, the resonator can be driven with a high intensity in the focal point without damaging the reflective surfaces.

In a preferred embodiment the resonator cavity has an opening on either side of the focal plane, the openings being preferably arranged such that they are intersected by the central axis. A central opening can be used to introduce a jet of gas or a particle beam into the focal point such that it can interact with the laser beam. At the same time the openings can be used to couple radiation generated in the focal point out of the resonator cavity without coupling any fluence of the laser beam out of the cavity. Hence, no laser beam intensity is lost by the out-coupling of radiation created in the focal point. Additionally, since the propagating mode shows a ring shape away from the focus it will not experience any significant loss due to diffraction at the edges of the opening hole.

In a further preferred embodiment the resonator cavity comprises at least six reflective surfaces, wherein a fifth and a sixth annularly closed reflective surface are rotationally symmetric about the central axis and arranged on opposite sides of the focal plane. Further, the reflective surfaces are arranged such that the laser beam travelling on a closed resonator path inside the cavity is reflected at least five times by the reflective surfaces and preferably once by each of the reflective surfaces between successive transitions of the focal point. By employing a fifth and a sixth reflective surface the outer dimension of the resonator cavity can be further reduced and a more compact design of the resonator cavity can be realized. This also provides an additional degree of freedom for beam shaping during one roundtrip in order to overcome impacts of surface variations of the reflective surfaces.

Preferably, the third and/or the fourth reflective surface has a sufficient transmission or a reduced reflectivity or reflectance as compared to all or at least some of the remaining reflective surfaces such that a driving laser beam having an intensity distribution with an annular or annularly closed shape in the far field can be efficiently coupled into the resonator cavity.

In another preferred embodiment the device comprises means for providing a driving laser beam for the resonator cavity. Said means comprise a laser source for emitting a driving laser beam, a unit for transforming a driving laser beam emitted by the laser source and a unit for matching a mode of a driving laser beam to the mode of the resonator cavity. A driving laser beam is a laser beam that can be coupled into a resonator cavity to excitate the laser beam propagating in the resonator cavity.

In a preferred embodiment, the laser source is a laser source adapted for emitting a driving laser beam having a Gauss mode. The unit for transforming a driving laser beam emitted by the laser source is an aspheric element, preferably an axicon. The axicon is adapted to transform a driving laser beam emitted by the laser source such that it has a mode similar to a Bessel-Gauss beam. Said unit for matching a mode of the driving laser beam comprises a first lens adapted for defocusing the driving laser beam having a mode similar to a Bessel-Gauss beam and coupling said driving laser beam having a mode similar to a Bessel-Gauss beam into the cavity through said reflective surface having a sufficient transmission and, preferably, a telescope comprising a second and a third lens, wherein the telescope can scale a width and a cone angle of the driving laser beam having a mode similar to a Bessel-Gauss beam. A driving laser beam having a Bessel-Gauss mode can be efficiently generated from a driving laser beam having a nearly Gauss mode by shining the driving laser beam onto an aspheric element including but not limited to an axicon. The width of the driving laser beam having a Bessel-Gauss mode and its cone angle can be varied and adapted for an optimal coupling into the resonator cavity by a simple telescope comprising a second and third lens. The driving beam is then defocused using a first lens for coupling it into the cavity through a reflective surface having a sufficient transmission. Such an arrangement allows for efficient in-coupling of a driving laser beam into the resonator cavity as the beam characteristics can be easily adjusted using the telescope and the defocusing lens. Furthermore, the resonator cavity can be easily adjusted for different driving laser beams.

In an alternative, preferred embodiment the laser source is a laser source adapted for emitting a laser beam having an intensity distribution with an annular or annularly closed shape in the far field and, preferably, with a central peak or annular or annularly closed shape in a focal point, or, even more preferred, a Bessel-Gauss beam. Thereby, the complexity of the device can be further reduced.

A further, alternative embodiment of the laser source is adapted for emitting a laser beam having a Gauss mode and the unit for transforming a driving laser beam emitted by the laser source and the unit for matching a mode of a driving laser beam comprise at least one aspheric element for transforming a driving laser beam emitted by the laser source into a driving laser beam having an intensity distribution with an annular or annularly closed shape in the far field and, preferably, with a central peak or annular or annularly closed shape in a focal point, or, even more preferred, a Bessel-Gauss beam, that can be coupled into the resonator cavity through said reflective surface having a sufficient transmission. Aspheric elements can be used to considerably reduce the extension of the means for providing a driving laser beam, which can also be referred to as the excitation beam path, and thus, the extension of the overall device.

In another preferred embodiment the device comprises at least one actuator, the actuator being attached to one of the reflective surfaces and adapted for deforming said reflective surface. An actuator for deforming the reflective surfaces is advantageous as the resonator cavity can be fine tuned for better self-consistency of the propagating mode, i.e. resonator surface variations can be compensated for.

It is further preferred to arrange an active optical medium in the resonator cavity.

In another aspect of the invention the problem is solved by a method for enhancing the intensity of a laser beam having an intensity distribution with an annular or annularly closed shape in the far field or outside the focal plane comprising the steps of providing a device according to any of the preceding embodiments and introducing a laser beam having an intensity distribution with an annular or annularly closed shape in the far field into the resonator cavity such that the laser beam travels on a closed resonator path and that the laser beam is reflected at least three times by the reflective surfaces and preferably once by each of the reflective surfaces between successive transitions of the common focal point. The method is advantageous for the same reasons as the device.

In another preferred embodiment the method further comprises the steps of emitting a driving laser beam by a laser source, transforming the driving laser beam emitted by the laser source with a unit for transforming a driving laser beam, preferably an axicon, matching the mode of a driving laser beam to a mode of the resonator cavity with a unit for matching a mode of a driving laser beam to the mode of the resonator cavity and coupling the driving laser beam having an intensity distribution with an annular or annularly closed shape in the far field into the resonator cavity through the third and/or the fourth reflective surface such that it excitates the resonator cavity, wherein the reflective surface through which the driving laser beam is coupled into the resonator cavity has a sufficient transmission or reduced reflectivity.

Four preferred embodiments of the present invention will now be described, by way of example only, with reference to the accompanying drawings of which

Fig. 1    is a schematic sectional drawing of a first embodiment of a resonator cavity comprised in a device according to the present invention,

Fig. 2    is a schematic sectional drawing of the first embodiment of a device according to the present invention comprising a resonator cavity and an arrangement of optical elements for providing a driving laser beam for the resonator cavity,

Fig. 3    is a schematic sectional drawing of a second embodiment of a resonator cavity comprised in a device according to the invention,

Fig. 4    is a schematic sectional drawing of a third embodiment of a resonator cavity comprised in a device according to the present invention,

Fig. 5    is a schematic sectional drawing of a fourth embodiment of a resonator cavity comprised in a device according to the present invention and

Fig. 6    is a schematic representation of two intensity distributions of a beam having an intensity distribution with a central peak in a focal plane and an annular or annularly closed shape outside the focal plane i.e. in the far field.

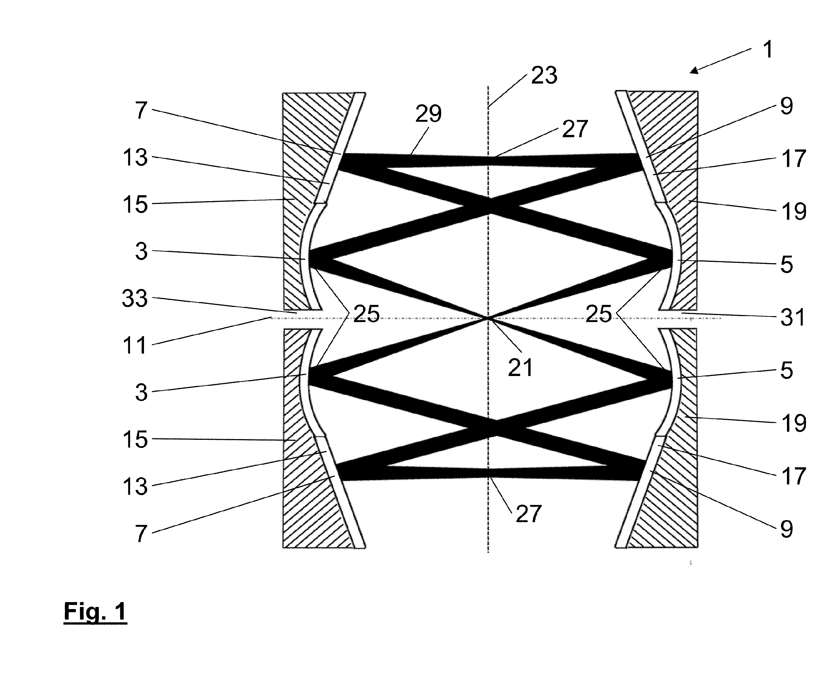

In the figures like numerals refer to like elements. Fig. 1 shows a schematic drawing of a first preferred embodiment of a resonator cavity 1 comprised in a device according to the present invention. The resonator cavity 1 comprises a first reflective surface 3, a second reflective surface 5, a third reflective surface 7 and a fourth reflective surface 9. The reflective surfaces 3, 5, 7, 9 are annularly closed surfaces having a circular circumference that is not visible in the drawings. Furthermore, the reflective surfaces 3, 5, 7, 9 are rotationally symmetric about a common central axis 11.

The first and the third reflective surface 3, 7 are formed by a coating 13 of a first common substrate 15. Likewise, a coating 17 of a second common substrate 19 resembles the second and the fourth reflective surface 5, 9. The reflectance i.e. the composition of the coatings 13, 17 defines the reflectance of the reflective surfaces 3, 5, 7, 9 and may vary across a substrate 15, 19 but should be the same within an area defining one of the reflective surfaces 3, 5, 7, 9. The area of the coating 13 forming the third reflective surface 7 can, for example, have a lower or reduced reflectance than the area of the coating 13 forming the first reflective surface 3 or a sufficient transmission allowing for efficient in-coupling of a driving laser beam (not shown in Fig. 1).

By arranging the reflective surfaces 3, 7 on the first common substrate 15 they are linked i.e. by moving the first common substrate 15 both the first and the third reflective surface 3, 7 can be adjusted. Likewise, the second and the fourth reflective surface 5, 9 are arranged on the second common substrate 17. Hence, the reflective surfaces 3, 5, 7, 9 can be easily aligned or, in other words, their position can be easily adjusted.

The first and the second reflective surface 3, 5 have an aspheric curvature defining a common focal point 21. The focal point 21 is intersected by the central axis 11 and a focal plane 23 extending perpendicular to the central axis 11. The curvatures of the first and the second reflective surface 3, 5 are symmetrical about the focal plane 23 and have an identical effective focal length *f*. The first and second reflective surface 3, 5 further have the same image distance s" representing the optical path length from the centre of the beam spot 25 to the conjugate focal plane 27 and the same object distance *s*.

The third and fourth reflective surfaces 7, 9 have a conical shape and are, likewise, symmetrical about the focal plane 23.

A pulsed laser beam 29 having an intensity distribution with a central peak in a focal plane and an annular shape in the far field can be coupled into the resonator cavity 1 e.g. through the third reflective surface 7 that has a sufficient transmission. The laser beam 29 is reflected once by every reflective surface 3, 5, 7, 9 between successive transitions of the focal point 21. The pulse rate of the laser beam 29 corresponds to the resonator cavity's 1 inherent repetition rate i.e. consecutive pulses of the laser beam 29 are separated by the same time the laser beam 29 requires for a full resonator roundtrip. The resonator cavity 1 of the first preferred embodiment further fulfils equations (2), (4) and (5).

The resonator cavity 1 comprises two openings 31, 33, one in either common substrate 13, 17. The openings 31, 33 are arranged such that they are intersected by the central axis 11. The openings 31, 33 are especially advantageous as, for example, radiation generated with HHG in the focal point 21 can be coupled out of the resonator cavity 1 through one or both of the openings 31, 33 without coupling any part of the laser beam 29 out of the resonator cavity 1. Furthermore, the openings 31, 33 can be used, e.g., for inserting a beam of charged particles into the focal point 21 such that the laser beam 29 can interact with the particle beam.

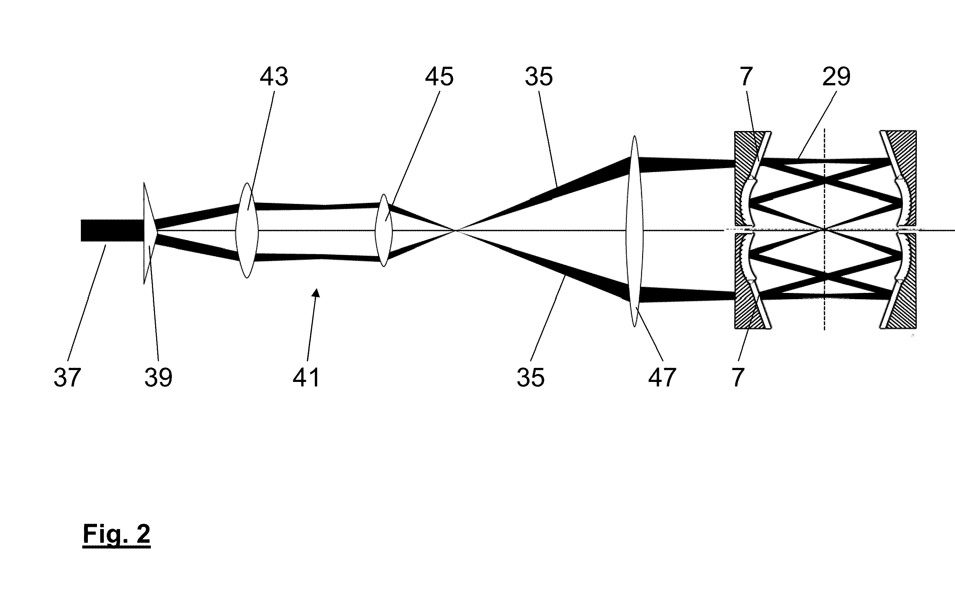

An exemplary embodiment of generating a driving laser beam 35, 37 and coupling the driving laser beam 35 having a mode similar to a Bessel-Gauss mode into a resonator cavity 1 is illustrated in Fig. 2.

In Fig. 2 the driving laser beam 37 having a mode similar to a Gauss mode can be emitted by a laser source (not shown). The driving laser beam 37 emitted from the laser source can be transformed by an aspherical optical element in the form of an axicon 39 to a driving laser beam 35 having a mode similar to a Bessel-Gauss mode. Next, the width and cone angle of the driving laser beam 35 can be altered by a telescope 41 comprising a second and a third lens 43, 45. Having adjusted the width and the cone angle of the driving laser beam 35 it can be defocused using a first lens 47 for enabling effective coupling the driving laser beam 35 into the resonator cavity 1 through the third reflective surface 7 having a sufficient transmission.

The exemplary embodiment of generating a driving laser beam 35 shown in Fig. 2 allows providing a driving laser beam 35 that can be efficiently coupled into a resonator cavity 1. The embodiment, furthermore, allows adapting various types of laser beams emitted from different laser sources. It is, however, important to notice that different ways of generating a driving laser beam 35 could as well be employed.

The resonator cavity 1 of the first exemplary embodiment is advantageous as it allows the generation of high laser beam intensities in the focal point 21 while keeping the laser beam intensities in the beam spots 25 at the reflective surfaces 3, 5, 7, 9 below a damage threshold. Furthermore, the resonator cavity 1 is very stable and insensitive to small changes in the distance of the reflective surfaces 3, 5, 7, 9. At the same time, the resonator cavity 1 is of compact outer dimensions due to the use of four reflective surfaces 3, 5, 7, 9 that allow a folding of the necessary required resonator roundtrip path. Furthermore, the resonator cavity 1 can be easily adapted for different pulse repetition rates as the aspherically curved first and second reflective surfaces 3, 5 readily enable an easy adaption of the resonator roundtrip length.

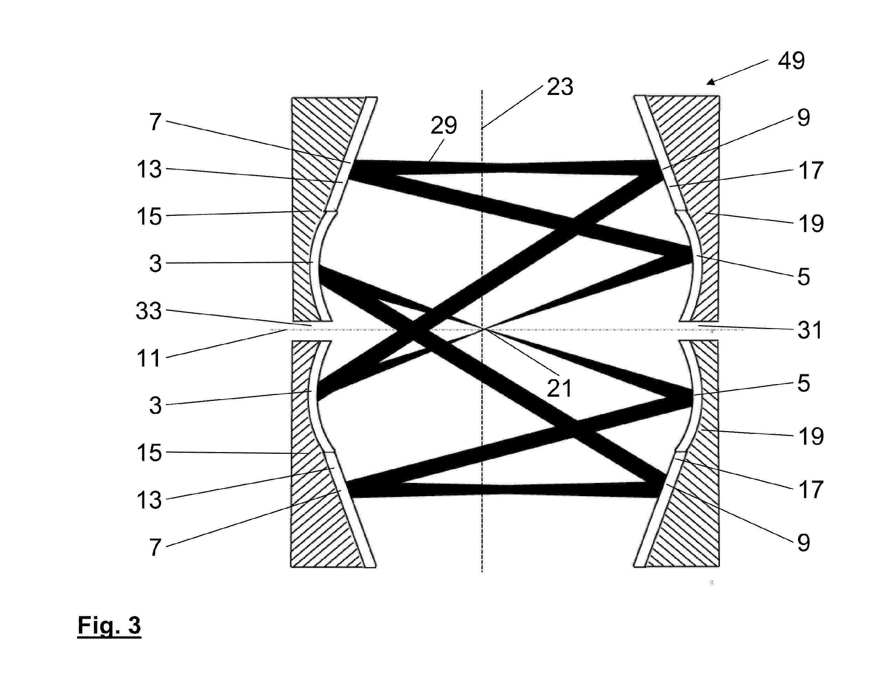

A second exemplary embodiment of a resonator cavity 49 comprised in a device according to the present invention is shown as a schematic sectional drawing in Fig. 3. Only those features of the second exemplary embodiment will be described here in more detail that differ from the first exemplary embodiment.

The resonator cavity 49 comprises four annular reflective surfaces 3, 5, 7, 9 that are rotationally symmetric about a common central axis 11. A first and a second reflective surface 3, 5 of the four reflective surfaces 3, 5, 7, 9 are aspherically curved, the curvatures defining a common focal point 21. However, in contrast to the resonator cavity 1 of the first exemplary embodiment of the present invention, the effective focal distance of the first and the second reflective surface 3, 5 is not the same. In other words, the reflective surfaces 3, 5, 7, 9 are not symmetrically arranged about the focal plane 23 that extends perpendicular to the central axis 11 through focal point 21.

Furthermore, it should be noted that a laser beam 29 having a mode similar to a Bessel-Gauss mode that can be inserted into the resonator cavity 49 is reflected once by every reflective surface 3, 5, 7, 9 between successive transitions of the focal point 21. The reflective surfaces 3, 5, 7, 9 are, however, aligned in such a manner that the laser beam 29 intersects the central axis 11 between successive transitions of the focal point 21.

The resonator cavity 49 advantageously provides a means for enhancing the intensity of a laser beam 29 having an intensity distribution with a central peak in a focal plane and an annular shape in the far field. The resonator cavity 49 of the second exemplary embodiment is especially advantageous as the focal point 21 is shifted closer to one of the openings 31, 33. Thereby, the opening 33 covers a larger solid angle allowing to increase the fluence of radiation created in the focal point 21 that can be efficiently coupled out of the resonator cavity 49.

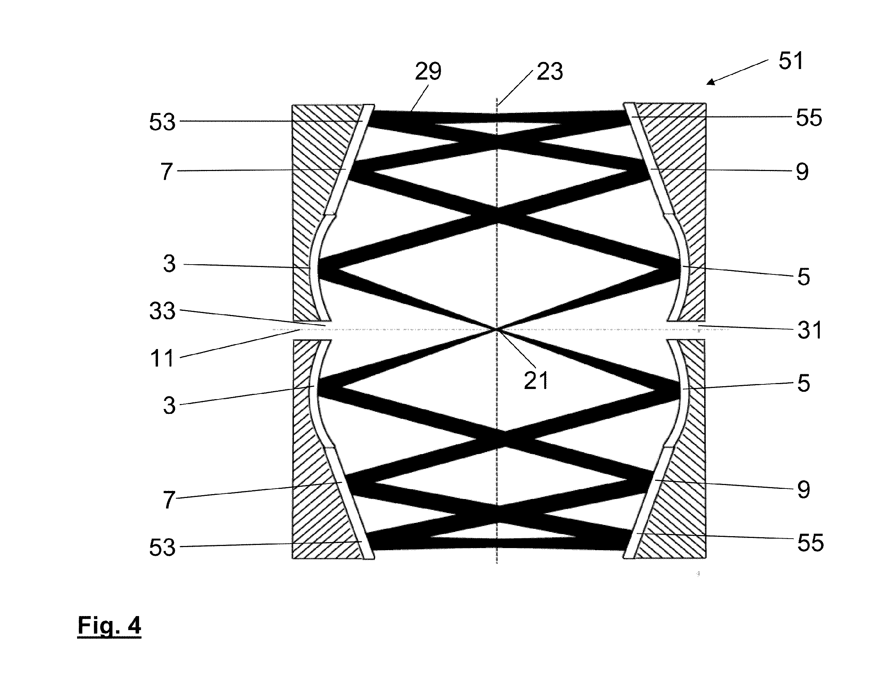

Fig. 4 shows a third exemplary embodiment of a resonator cavity 51 comprised in a device according to the present invention. Only those features of the third exemplary embodiment will be described here in more detail that differ from the first exemplary embodiment.

The resonator cavity 51 comprises six annular reflective surfaces 3, 5, 7, 9, 53, 55 that are rotationally symmetric about a common central axis 11. A fifth and a sixth reflective surface 53, 55 has a conical curvature i.e. the fifth and the sixth reflective surface 53, 55 steer a laser beam 29 that can be inserted into the resonator cavity 51. The laser beam 29 is reflected once by every reflective surface 3, 5, 7, 9, 53, 55 between successive transitions of the focal point 21.

The resonator cavity 51 is advantageous as it allows for a very compact design of the resonator cavity 51 by folding the resonator path once more using the additional fifth and sixth reflective surface 53, 55 i.e. the distance between the reflective surfaces 3, 5, 7, 9, 55 is considerably smaller than in the case of the first exemplary embodiment of a resonator cavity 1 comprised in a device according to the present invention.

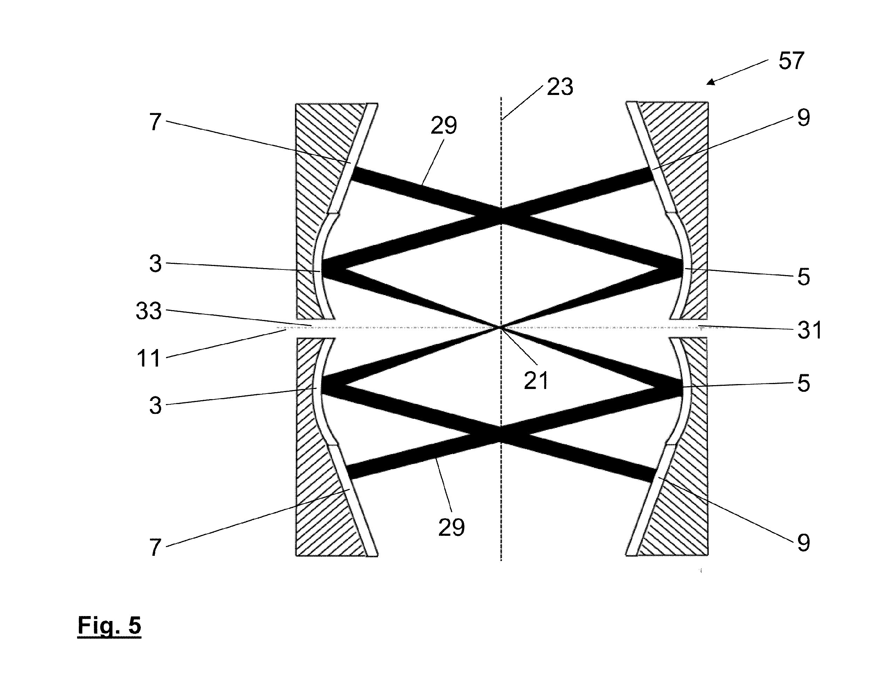

Fig. 5 shows a fourth exemplary embodiment of a resonator cavity 57 according to the present invention. Only those features of the fourth exemplary embodiment will be described here in more detail that differ from the first exemplary embodiment.

The resonator cavity 57 comprises four reflective surfaces 3, 5, 7, 9 that are rotationally symmetric about a common central axis 11. The reflective surface 3, 5, 7, 9 are arranged such that a laser beam 29 is reflected by three reflective surfaces between successive transitions of the focal point 21. A laser beam 29 can be coupled in the resonator cavity 57 through a third reflective surface 7 that has a sufficiently high transmission compared to the second reflective surface 5. It is, however, also possible to couple a laser beam 29 into the resonator cavity 57 through the third and fourth reflective surface 7, 9 at the same time, provided that the third and the fourth reflective surface 7, 9 have a sufficiently high transmission. The second reflective surface 5 can focus the beam into the focal point 21. Having passed the focal point 21 the laser beam 29 can than be reflected by the first reflective surface 3 on to the fourth reflective surface 9. The fourth reflective surface 9 is plane and arranged perpendicular to the propagation direction of the laser beam 29 i.e. it can reflect the incoming laser beam 29 back to the first reflective surface 3 that can, in turn, focus the laser beam 29 into the focal point 21.

Provided that a laser beam 29 with a pulse repetition rate matching an even multiplier of the resonator cavity's 57 inherent pulse rate is introduced into the resonator cavity 57, consecutive pulses can be overlapped in the focal point 21 of the resonator cavity 57 from different directions. Thereby, the intensity of the laser beam 29 in the focal point 21 can be ideally doubled without exceeding the damage threshold of the reflective surfaces 3, 5, 7, 9.

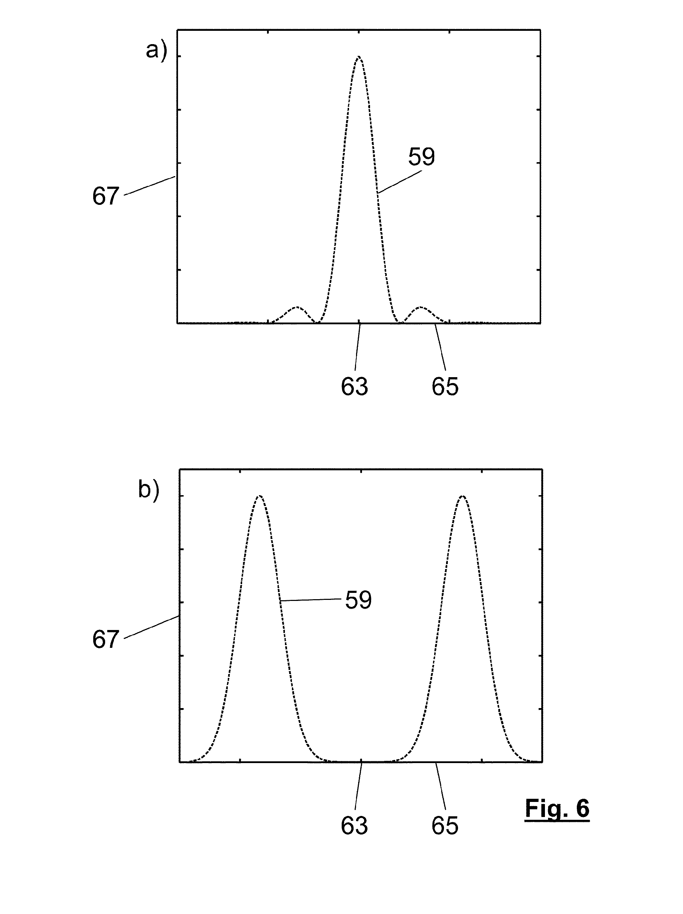

Fig. 6 shows two intensity distributions 59, 61 of an exemplary laser beam in form of a Bessel-Gauss beam having an intensity distribution with a central peak in a focal plane and an annular shape in the far field i.e. outside the focal plane. The ordinate systems in Fig. 6a) and b) display the distance from the centre 63 of the laser beam on the abscissa 65 and the intensity of the laser beam on the ordinate 67. Fig. 6a) shows the intensity distribution of the laser beam in a focal plane. The intensity distribution has a Gaussian shape. Fig. 6b) shows the annular intensity distribution of the laser beam outside the focal plane i.e. in the far field.

## Claims

1. A device for enhancing the intensity of a laser beam (29) having an intensity distribution which has an annular shape in the far field, the device comprising a resonator cavity (1, 49, 51, 57),
   **characterized in that** the resonator cavity (1, 49, 51, 57) comprises at least four annularly closed reflective surfaces (3, 5, 7, 9, 53, 55),
   wherein a first reflective surface (3) and a second reflective surface (5) of the at least four reflective surfaces (3, 5, 7, 9, 53, 55) have a curvature defining a common focal point (21),
   wherein the first reflective surface (3) and the second reflective surface (5) are arranged on opposite sides of a focal plane (23) that extends through the focal point (21),
   wherein a third reflective surface (7) and a fourth reflective surface (9) of the at least four reflective surfaces (3, 5, 7, 9, 53, 55) are arranged on opposite sides of the focal plane (23),
   wherein the resonator cavity (1, 49, 51, 57) and the reflective surfaces (3, 5, 7, 9, 53, 55) are arranged such that a laser beam (29) having an intensity distribution which has an annular shape in the far field can be introduced into the resonator cavity (1, 49, 51, 57) in such a manner, that it travels on a closed resonator path inside the resonator cavity (1, 49, 51, 57) and is reflected at least three times by the reflective surfaces (3, 5, 7, 9, 53, 55) between successive transitions of the focal point (21).

2. A device according to claim 1, **characterized in that** the reflective surfaces (3, 5, 7, 9, 53, 55) are arranged such that the laser beam (29) is reflected once by each of the reflective surfaces (3, 5, 7, 9, 53, 55) between successive transitions of the focal point (21).

3. A device according to claim 1, **characterized in that** the reflective surfaces (3, 5, 7, 9, 53, 55) are arranged such that the laser beam (29) is reflected twice by the first or the second reflective surface (3, 5) and once by the third or the fourth reflective surface (7, 9) between successive transitions of the focal point (21).

4. A device according to any of the previous claims, **characterized in that** at least one and preferably all of the reflective surfaces (3, 5, 7, 9, 53, 55) are rotationally symmetric about a common central axis (11) that intersects the focal point (21) and extends perpendicular to the focal plane (23).

5. A device according to any of the preceding claims, **characterized in that** the curvature of the first reflective surface (3) and the second reflective surface (5) is aspheric.

6. A device according to any of the preceding claims, **characterized in that** the reflective surfaces (3, 5, 7, 9, 53, 55) are arranged symmetrically about the focal plane (23).

7. A device according to any of the preceding claims, **characterized in that** the reflective surfaces (3, 5, 7, 9, 53, 55) are arranged such that the conjugate focal plane (27) of the first and second reflective surface (3, 5) is identical to the focal plane (23).

8. A device according to any of the preceding claims, **characterized in that** half of an optical length of a roundtrip of a laser beam in the resonator cavity (1, 49, 51, 57) is equal to the sum of an object distance and an image distance of the first and/or the second reflective surface (3, 5).

9. A device according to any of the preceding claims, **characterized in that** the laser beam (29) that can be introduced into the resonator cavity (1, 49, 51, 57) can be pulsed with a repetition rate which corresponds to the resonator cavity's inherent repetition rate multiplied or divided by an integer.

10. A device according to any of the preceding claims, wherein the inverse of an effective focal length of the first reflective surface (3) is equal to the sum of the inverse of the image distance of the first reflective surface (3) and the inverse of a second term,
wherein the second term is the sum of the object distance of the first reflective surface (3) and the squared Rayleigh-length of a Gaussian component of the laser beam divided by the difference between the object distance and the effective focal length of the first reflective surface (3).

11. A device according to any of the preceding claims, wherein the object distance s of the first reflective surface (3) is that object distance s satisfying the equation

$$0 = -s^3 + (r+f) \cdot s^2 + (-2 \cdot r \cdot f - z_R^2) \cdot s + (r \cdot z_R^2 - f \cdot z_R^2 + r \cdot f^2)$$

that yields the largest beam spot of the laser beam having an intensity distribution which has an annular shape in the far field, on the first reflective surface (3),
wherein r is the half of the optical length of the roundtrip of a laser beam in the resonator cavity (1, 49, 51), $f$ is the effective focal length of the first reflective surface (3) and $z_R$ is the Rayleigh-length of a Gaussian component of the laser beam (29).

12. A device according to any of the preceding claims, wherein the resonator cavity (1, 49, 51, 57) has an opening (31, 33) on either side of the focal plane (23), the openings (31, 33) being preferably arranged such that they are intersected by the central axis (11).

13. A device according to any of the preceding claims, **characterized in that** the resonator cavity (31, 33) comprises at least six reflective surfaces (3, 5, 7, 9, 53, 55),
wherein a fifth and a sixth annularly closed reflective surface (53, 55) are rotationally symmetric about the central axis (11) and arranged on opposite sides of the focal plane (23), and
**in that** the reflective surfaces (3, 5, 7, 9, 53, 55) are arranged such that the laser beam (29) travelling on a closed resonator path inside the resonator cavity (51) is reflected at least five times by the reflective surfaces (3, 5, 7, 9, 53, 55) and preferably once by each of the reflective surfaces (3, 5, 7, 9, 53, 55) between successive transitions of the focal point (21).

**14.** A device according to any of the preceding claims, **characterized in that** the third and/or the fourth reflective surface (7, 9) has a sufficient transmission such that a driving laser beam (35) having an intensity distribution which has an annular shape in the far field can be coupled into the resonator cavity (1, 49, 51, 57).

**15.** A method for enhancing the intensity of a laser beam (29) having an intensity distribution which has an annular shape in the far field, comprising the steps of
providing a device according to any of the preceding claims and
introducing a laser beam (29) having an intensity distribution which has an annular shape in the far field into the resonator cavity (1, 49, 51, 57) such that the laser beam (29) travels on a closed resonator path and that the laser beam (29) is reflected at least three times by the reflective surfaces (3, 5, 7, 9, 53, 55) between successive transitions of the common focal point (21).

**Fig. 1**

EP 2 700 986 A1

**Fig. 2**

EP 2 700 986 A1

Fig. 3

**Fig. 4**

EP 2 700 986 A1

Fig. 5

Fig. 6

Europäisches
Patentamt

European
Patent Office

Office européen
des brevets

**EUROPEAN SEARCH REPORT**

Application Number

EP 12 18 1814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/073784 A1 (KARTNER FRANZ X [US] ET AL) 31 March 2011 (2011-03-31) * figure 1 * ----- | 1-15 | INV. G02B5/10 H05G2/00 |
| X | US 2011/140009 A1 (KAERTNER FRANZ X [US] ET AL) 16 June 2011 (2011-06-16) * figure 12 * ----- | 1,15 | |

TECHNICAL FIELDS SEARCHED (IPC)

G02B
H05G

The present search report has been drawn up for all claims

| Place of search | Date of completion of the search | Examiner |
|---|---|---|
| Munich | 11 January 2013 | Rödig, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .........................................................................
& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**

EP 12 18 1814

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2013

| Patent document cited in search report | Publication date | Patent family member(s) | Publication date |
|---|---|---|---|
| US 2011073784 A1 | 31-03-2011 | US 2011073784 A1<br>WO 2011041493 A2 | 31-03-2011<br>07-04-2011 |
| US 2011140009 A1 | 16-06-2011 | US 2011140009 A1<br>WO 2011139303 A2 | 16-06-2011<br>10-11-2011 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. HOLZBERGER et al.** Sub-25 nm High-Harmonic Generation with a 78-MHz Repetition Rate Enhancement Cavity. *proceedings of the 2012 Quantum Electronics and Laser Science Conference,* 06 May 2012

- **K.D. MOLL et al.** Output coupling methods for cavity-based high-harmonic generation. *Optics Express,* 04 September 2006, vol. 14 (16
- High-Intensity Bessel-Gauss Beam Enhancement Cavities. *proceedings of the 2010 Conference on Lasers and Electro-Optics,* 16 May 2010